# FASCICULE DE BREVET EUROPEEN

(11) **EP 0 776 537 B1**
(45) Date de publication et mention de la délivrance du brevet: **18.08.1999**
(21) Numéro de dépôt: 96922936.8
(22) Date de dépôt: 17.06.1996
(51) Int. Cl.: H02B 1/04

(54) **DISPOSITIF DE COMMANDE OU DE SIGNALISATION ELECTRIQUE MUNI D'UN BLOC AMOVIBLE**
ELEKTRIKSTEUERUNGS- ODER SIGNALISIERUNGSANORDNUNG MIT ABNEHMBAREM BLOCK
ELECTRICAL SIGNALLING OR CONTROL DEVICE WITH A DETACHABLE BLOCK

(30) Priorité: 20.06.1995 FR 9507462
(43) Date de publication de la demande: 04.06.1997
(73) Titulaire: Schneider Electric Industries SA, 92100 Boulogne Billancourt (FR)
(72) Inventeur: CUINGNET, Patrick, F-16800 Sochaux (FR)
(74) Mandataire: Carias, Alain
(86) Numéro de dépôt international: FR9600928
(87) Numéro de publication internationale: WO9701205

(56) Documents cités:
- DE-A- 2 446 912

## Description

La présente invention concerne un dispositif de commande ou de signalisation électrique tel qu'un bouton-poussoir comportant un corps à engager dans un orifice d'une paroi et un bloc électrique, notamment un bloc de contacts, ainsi qu'une embase porteuse rapportée au corps au revers de la paroi et munie de moyens de fixation amovible pour le bloc électrique.

La fixation amovible du bloc électrique à l'embase porteuse doit s'effectuer de manière fiable et durable. Il est déjà connu, par exemple d'après le document DE-24 46 912, de prévoir sur le bloc électrique deux pattes élastiques qui s'encliquettent dans des encoches latérales de l'embase, mais la fixation ainsi obtenue n'est pas suffisamment résistante. Il est d'autre part connu de fixer le bloc de contacts à l'embase au moyen d'une seule vis ; la fixation est alors résistante et peut s'effectuer assez rapidement, mais le positionnement préalable du bloc n'est pas satisfaisant.

L'invention a pour but de conférer à la fixation d'un bloc électrique sous une embase d'un dispositif de commande ou de signalisation du type décrit ci-dessus une grande solidité, tout en réduisant le temps de montage du dispositif.

Selon l'invention, le bloc électrique comporte, sur sa face de fixation située vers l'embase porteuse, d'un côté une vis de fixation coopérant avec un trou taraudé de l'embase et du côté opposé un talon rigide de positionnement et de maintien engagé dans un redan de forme complémentaire ménagé dans l'embase.

L'introduction du talon rigide dans le redan permet à l'opérateur de prépositionner avec effet de retenue un côté du bloc électrique sur l'embase avant de serrer la vis située de l'autre côté.

Les blocs électriques sont avantageusement empilables et présentent à cet effet, sur leur face de raccordement qui est située à l'opposé de l'embase, un élément taraudé et un redan similaires à ceux de l'embase pour recevoir la vis de fixation et respectivement le talon rigide d'un bloc empilé.

L'invention sera mieux comprise à la lecture de la description, qui va être faite ci-après en regard des figures, d'un mode de réalisation préférentiel.

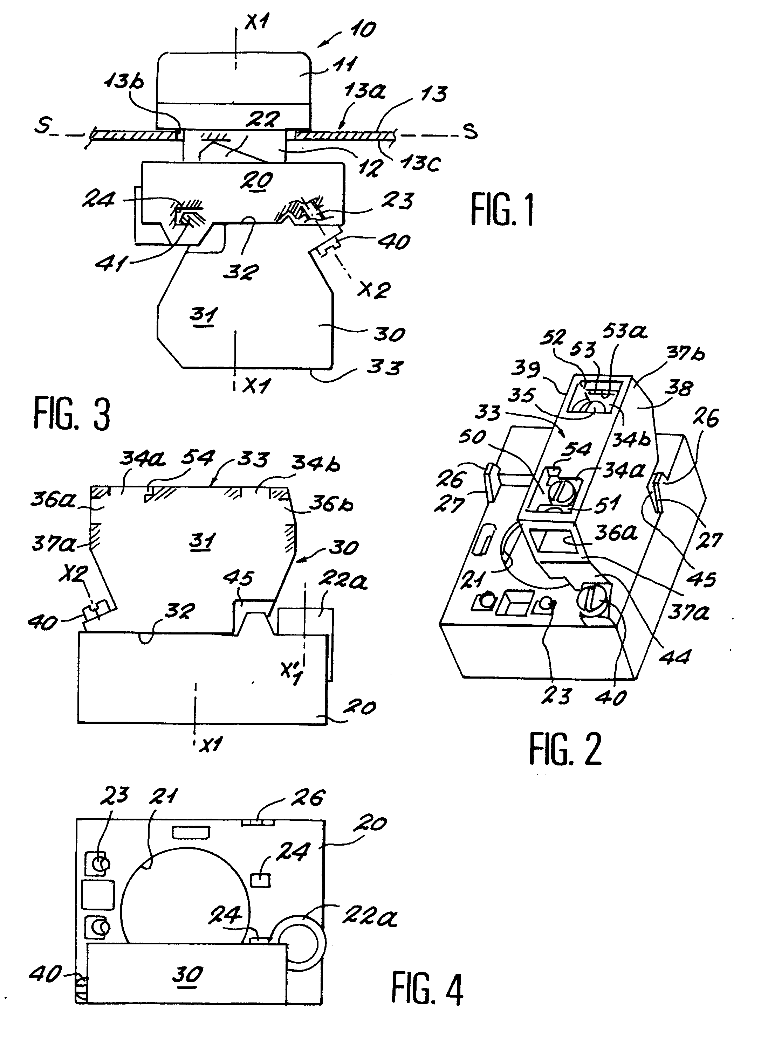

- la figure 1 est une vue en élévation d'un bouton-poussoir conforme à l'invention.
- la figure 2 montre en perspective une partie du bouton-poussoir, constituée par l'embase et le bloc de contacts.
- la figure 3 est une vue en élévation de la partie du bouton-poussoir représentée figure 2.
- la figure 4 est une vue en plan de la partie représentée figure 3.
- la figure 5 est une vue en perspective d'un empilage de blocs de contacts sous l'embase du bouton-poussoir.
- la figure 6 est une vue de côté de l'empilage.

Le dispositif de commande ou de signalisation électrique illustré sur les figures est un bouton-poussoir comportant un corps 10 muni d'une tête 11 et d'une partie tubulaire 12 d'axe X1 et de diamètre inférieur à la largeur de la tête. Celle-ci est posée avec éventuellement un joint et/ou une étiquette non représentés sur une face externe 13a d'une paroi mince de support 13, par exemple métallique, qui appartient à une enveloppe telle qu'un pupitre, une armoire, ... La paroi 13 est orientée selon un plan S et comprend un orifice 13b dans lequel s'engage avec jeu la partie tubulaire 12 du bouton-poussoir, cette partie comprenant par exemple la queue mobile de poussée du bouton.

Une embase 20 à contour général polygonal, de préférence rectangulaire, est associée au bouton-poussoir au revers de la paroi 13, c'est-à-dire du côté inteme de la paroi 13, pour porter de manière amovible des blocs électriques amovibles 30 tels que des blocs de contact interrupteurs, des blocs de voyant ou des blocs auxiliaires. L'embase est mise en place sur la partie tubulaire 12 et en est rendue solidaire par des éléments de forme coopérant entre eux, par exemple par emboîtement ou encliquetage, pour empêcher l'extraction de l'embase dans la direction X1. L'embase 20 offre une ouverture centrale 21 pour le libre passage de la partie tubulaire 12 du bouton-poussoir et elle est d'autre part ancrée contre la face interne 13c de la paroi 13 au moyen d'un coulisseau d'accrochage 22 sollicité par une vis de manoeuvre située dans un logement 22a d'axe X'1 parallèle à X1.

Le bloc de contacts 30 comporte un boîtier prismatique 31 en matière isolante présentant du côté de l'embase une face de fixation 32 et du côté opposé une face de raccordement 33 pour l'accès d'un outil, via des orifices 34a, 34b ménagés dans cette face 33, à des vis ou autres éléments de connexion 35 pour des conducteurs de câblage à introduire latéralement. Les conducteurs peuvent être introduits par des orifices 36a, 36b ménagés dans de petites faces latérales 37a, 37b du boîtier ; celui-ci présente enfin de grandes faces latérales 38,39.

L'embase 20 est en matière métallique ou plastique ; elle est prévue pour porter plusieurs blocs de contact 30 côte à côte, au nombre de trois ou plus. Pour être fixé à l'embase, chaque bloc 30 présente sur sa face de fixation 32 d'un côté une vis de fixation 40 d'axe X2 incliné par rapport à X1 et coopérant avec un trou 23 directement taraudé dans l'embase si celle-ci est métallique, ou appartenant à un insert métallique si l'embase est en matière plastique ; le bloc présente sur sa face de fixation 32 et de l'autre côté un talon rigide 41 qui est accroché dans un redan 24 de forme complémentaire ménagé dans l'embase et qui est appliqué contre un épaulement 24a de ce redan de manière à résister aux efforts communiqués au bloc de contacts par le bouton-poussoir selon l'axe X1 de poussée.

Les trois trous taraudés 23 sont prévus sur un petit côté de l'embase et les trois redans 24 sur le petit côté opposé de l'embase. Un doigt mobile 42 du bloc 30 dépasse de sa face de fixation 32 pour coopérer avec la partie mobile du bouton-poussoir; un pion ou une nervure rigide de positionnement 43 est prévu sur la face de fixation 32 du bloc de contacts près de la vis 40 pour coopérer avec un trou ou une fente de positionnement 25 de l'embase et pour contribuer ainsi, après mise en place du talon dans le redan, à bien positionner la vis.

La vis de fixation 40 est accessible par un pan coupé 44 ménagé dans la petite face latérale 37a du boîtier 31. A la base des grandes faces latérales 38, 39 du bloc de contacts est prévu un retrait 45 qui coopère avec des oreilles 26 de guidage et de maintien appartenant à l'embase ; ces oreilles sont en saillie vers le bas et possèdent une arête inclinée 27 dont la face externe prolonge les grandes parois latérales de l'embase. On réalise ainsi un guidage satisfaisant de la face latérale du bloc de contacts quand on approche celui-ci en biais et que l'on engage son talon rigide 41 dans le redan 24 de l'embase, pour obtenir finalement un alignement d'une grande face latérale 38 ou 39 d'un bloc extérieur avec la grande paroi correspondante de l'embase.

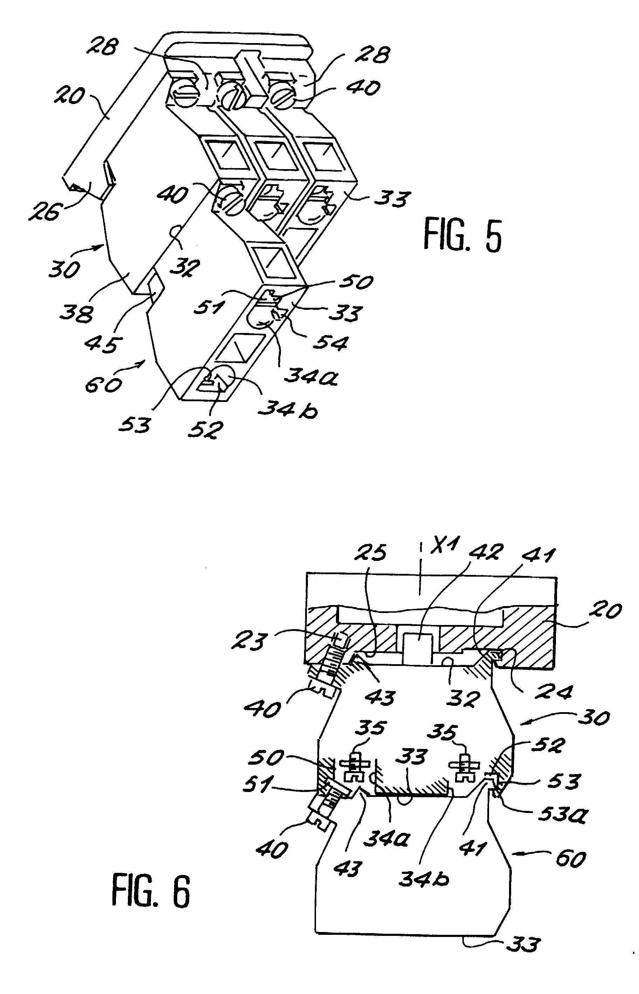

Sur sa face de raccordement 33, le bloc 30 présente d'un côté un orifice 50 dans lequel est logé un insert 51 tel qu'un écrou ou une pièce à trou taraudé d'axe oblique parallèle à X2 pour recevoir la vis de fixation 40 d'un bloc 60 empilé sur le bloc 30. L'écrou 51 joue le même rôle que le trou taraudé 23 de l'embase 20. De l'autre côté, le bloc 30 présente un orifice 52 muni d'un redan 53 à épaulement de retenue 53a similaire au redan 24 de l'embase 20 pour redevoir le talon rigide 41 du bloc 60. Bien que les orifices 50, 52 puissent être distincts des orifices 34a, 34b, des vis 35, ils sont de préférence communs avec ces orifices comme indiqué sur les figures 5 et 6. Le pion ou la nervure 43 situé sur la face de fixation 32 du bloc sous-jacent 60 coopère avec un trou ou une fente 54 ménagé dans la face de raccordement 33 du bloc de contacts 30. Des formes d'emboîtement 28 peuvent être prévues sous l'embase 20 (voir figure 5) entre les trous taraudés 23 pour guider et emboîter le côté correspondant de la face de fixation 32 des blocs 30.

On peut empiler ainsi plusieurs blocs 30 en bénéficiant des dispositions à vis et talon rigide prévues pour la fixation directe des blocs à l'embase métallique.

## Revendications

1. Dispositif de commande ou de signalisation électrique tel qu'un bouton-poussoir comportant un corps à engager dans un orifice d'une paroi et un bloc électrique, notamment un bloc de contacts, ainsi qu'une embase porteuse (20) rapportée au corps au revers de la paroi et munie de moyens de fixation amovible pour le bloc électrique,
caractérisé par le fait que le bloc électrique (30) comporte, sur sa face de fixation (32) située vers l'embase porteuse (20), d'un côté une vis de fixation (40) coopérant avec un trou taraudé (23) de l'embase, du côté opposé un talon rigide (41) de positionnement et de maintien engagé dans un redan (24) de forme complémentaire ménagé dans l'embase.

2. Dispositif selon la revendication 1, caractérisé par le fait que le redan (24) ménagé dans l'embase porteuse (20) présente un épaulement (24a) de retenue du bloc de contacts (30) selon l'axe (X1) de poussée du dispositif.

3. Dispositif selon la revendication 1, caractérisé par le fait que le bloc électrique (30) comporte, sur sa face de raccordement (33) située à l'opposé de l'embase, d'un côté un orifice de fixation (50) muni d'un insert (51) à trou taraudé tel
qu'un écrou pour coopérer avec la vis de fixation (40) d'un bloc électrique empilé (60) et, du côté opposé, un redan (53) semblable à celui de l'embase pour coopérer avec le talon rigide (41) du bloc empilé (60).

4. Dispositif selon la revendication 3, caractérisé par le fait que l'orifice de fixation (50) est ménagé latéralement dans l'orifice (34a) de logement d'un élément d'actionnement tel qu'une vis (35) d'une borne de connexion du bloc électrique.

5. Dispositif selon la revendication 1, caractérisé par le fait que la vis de fixation (35) est disposée oblique et accessible au moyen d'un pan coupé (44) pratiqué dans une face latérale (37a) du bloc électrique.

6. Dispositif selon la revendication 1, caractérisé par le fait que le bloc électrique (30) comporte dans ses grandes faces latérales (38, 39) des retraits (45) prévus pour coopérer avec une oreille de guidage et de maintien (26) prévue en saillie sur l'un ou l'autre côté de l'embase porteuse (20).

## Patentansprüche

1. Elektrische Steuer- oder Anzeigevorrichtung, wie beispielsweise ein Druckknopf, mit einem in eine Öffnung einer Wand einzuführenden Körper und einem Stromblock, insbesondere einem Kontaktblock, sowie mit einem Tragsockel (20), der am Körper am Rücken der Wand angeordnet und mit beweglichen Befestigungsmitteln für den Stromblock ausgestattet ist, dadurch gekennzeichnet, dass der Stromblock (30) an seiner zur Tragsockel (20) hin gerichteten Befestigungsfläche (32) auf einer Seite eine mit einem Gewindeloch (23) des Sockels zusammenwirkende Befestigungsschraube (40) aufweist, und auf der gegenüberliegenden Seite einen starren Positionier- und Halteabsatz (41), der in eine im Sockel vorgesehene Stufe (24) entsprechender Form eingeführt wird.

2. Vorrichtung nach Anspruch 1, dadurch gekennzeichnet, dass die im Tragsockel (20) vorgesehene Stufe (24) ein Halteschulterstück (24a) des Kontaktblockes (30) nach der Schubachse (X1) der Vorrichtung aufweist.

3. Vorrichtung nach Anspruch 1, dadurch gekennzeichnet, dass der Stromblock (30) an seiner dem Sockel gegenüberliegenden Anschlussfläche (33) auf einer Seite eine mit einem Einsatz (51) mit Gewindeloch, wie beispielsweise eine Mutter, ausgerüstete Befestigungsöffnung (50) umfasst, um mit der Befestigungsschraube (40) eines aufgestapelten Stromblockes (60) zusammenzuwirken, und auf der gegenüberliegenden Seite eine Stufe (53) ähnlich derjenigen des Sockels, um mit dem starren Absatz (41) des aufgestapelten Blockes (60) zusammenzuwirken.

4. Vorrichtung nach Anspruch 3, dadurch gekennzeichnet, dass die Befestigungsöffnung (50) seitlich in der Aufnahmeöffnung (34a) eines Betätigungselementes, wie beispielsweise eine Schraube (35) einer Anschlussklemme des Stromblockes, vorgesehen ist.

5. Vorrichtung nach Anspruch 1, dadurch gekennzeichnet, dass die Befestigungsschraube (35) schräg angeordnet und über eine schräge Kante (44) in einer Seitenfläche (37a) des Stromblockes zugänglich ist.

6. Vorrichtung nach Anspruch 1, dadurch gekennzeichnet, dass der Stromblock (30) in seinen breiten Seitenflächen (38, 39) Rücksprünge (45) aufweist, die mit einem Führungs- und Halteohr (26) zusammenwirken sollen, das auskragend an der einen oder anderen Seite des Tragsockels (20) vorgesehen ist.

## Claims

1. An electrical control or signalling device such as a push button comprising a body to be inserted into an orifice in a wall and an electrical unit, notably a contact block, and a supporting baseplate (20) detachably joined to the body on the back of the wall and fitted with removable fixing means for the electrical unit.
characterised by the fact that the electrical unit (30) includes, on its fixing surface (32) situated towards the supporting baseplate (20), on one side a fixing screw (40) that engages a tapped hole (23) in the baseplate, and on the opposite side a rigid positioning and holding heel (41) inserted into a recess (24) of complementary shape made in the baseplate.

2. A device according to Claim 1, characterised by the fact that the recess (24) made in the supporting baseplate (20) has a shoulder (24a) for retaining the contact block (30) along the pushing axis (X1) of the device.

3. A device according to Claim 1, characterised by the fact that the electrical unit (30) includes, on its connection face (33) situated on the other side to the baseplate, on one side, a fixing orifice (50) fitted with an insert 51 with a tapped hole such as a nut to engage with the fixing screw (40) of a stacked electrical unit (60) and, on the opposite side, a recess (53) similar to that in the baseplate, that engages with the rigid heel (41) of the stacked unit (60).

4. A device according to Claim 3, characterised by the fact that the fixing orifice (50) is made laterally in the housing orifice (34a) of an actuating element such as a screw (35) of a connecting terminal of the electrical unit.

5. A device according to Claim 1, characterised by the fact that the fixing screw (35) is positioned obliquely and is accessible by means of a cutaway (44) made in the side face (37a) of the electrical unit.

6. A device according to Claim 1, characterised by the fact that the electrical unit (30) incorporates in its large side faces (38, 39) recesses (45) provided to engage a guiding and holding lug (26) which projects from one or the other side of the supporting baseplate (20).
